# EUROPEAN PATENT APPLICATION

(11) **EP 2 719 454 A1**
(43) Date of publication of application: **16.04.2014**
(21) Application number: 12188193.2
(22) Date of filing: 11.10.2012
(51) Int. Cl.: B01J 23/22, B01J 35/04, B01J 37/02, B01J 37/03, B01J 37/10, B01D 53/94, B01J 23/30

(54) **Thermostable Vanadia SCR catalyst and a process of preparation thereof**

(71) Applicant: Treibacher Industrie AG, 9330 Treibach-Althofen (AT)
(72) Inventor: Schermanz, Karl, 9314 Launsdorf (AT); Hamon, Christian, 44600 Saint Nazaire (FR); Sagar, Amod, 9330 Althofen (AT)
(74) Representative: Schwarz & Partner

(57) **Abstract**

Catalyst composition for removing nitrogen oxides in exhaust gases, comprising Titania/Vanadia and an Alumina precursor as a binder, a catalyst for removing nitrogen oxides in exhaust gases, comprising such catalyst on a support and a process for the preparation of such catalyst.

## Description

The present invention relates to a thermostable vanadia SCR catalyst, more specifically to a Titania/Vanadia catalyst with excellent thermal stability for selective catalytic reduction (SCR) of NOx in exhaust gases.

Such a catalyst may be used particularly in exhaust gas aftertreatment of diesel- and lean burn engines of automotives.

### Background of the invention

The most widely employed technology for removal of NOₓ out of exhaust gases is S(elective) C(atalytic) R(eduction) (see e.g. O. Kröcher, Chapter 9 in « Past and Present in DeNOx Catalysis », edited by P. Granger et al., published by Elsevier 2007) according to which NOₓ is removed by reaction with NH₃ to form nitrogen and water according to the reaction:

4 NO + 4 NH₃ + O₂ = 4 N₂ + 6 H₂O

A huge number of modern SCR-catalysts are based on Vanadia (V₂O₅) as the catalytically active component which is dispersed on a Titania support.

There are reported commercial applications of V₂O₅/WO₃-TiO₂ materials for exhaust gas aftertreatment of automotives by O. Kröcher in Chapter 9, p. 267f in « Past and Present in DeNOx Catalysis », edited by P. Granger et al.

Titania-tungsten oxide based catalysts containing Vanadia (V₂O₅) as active component are applied for making automotive catalysts in a huge number (approx. 4 Mio. catalysts/year) as indicated in a presentation given by Dirk Vatareck (Catalysts Automotive Applications, Argillon) at the 3rd CTI Forum SCR Systems (Bonn, 09 Apr 2008).

Vanadia (V₂O₅) containing materials based on TiO₂/WO₃ which additionally may contain other oxides out of transition metals, Rare Earths and other elements and their application in SCR are widely disclosed in numerous publications.

As an example, in GB 1 495 396 there are described SCR active compositions containing oxides from titanium, at least one of molybdenum, tungsten, iron, vanadium, nickel, cobalt, copper, chromium and uranium, and as optional component(s) tin and/or at least one of silver, beryllium, magnesium, zinc, boron, aluminium, yttrium, rare earth metal, silicon, niobium, antimony, bismuth, manganese, thorium and zirconium, which oxides are present in the form of an an intimate mixture.

The main disadvantage of Vanadia based SCR catalysts known to present is the limited stability at temperatures above 600°C.

A report on the stability of a SCR system based on TiO₂/WO₃/V₂O₅ for example is presented by Jan MT et al. in Chemical Engineering & Technology, Vol. 30, No10, 1440 -1444, 2007, wherein it is disclosed that a deactivation of the catalyst occurs since V₂O₅ melts at approximately 650°C.

A TiO₂/WO₃/V₂O₅ suitable SCR catalyst for NOₓ removal of Diesel-powered vehicles is described in US 6 805 849 B1, column 2. Although such a catalyst has shown good performance it was found that sustained high temperature operation can cause catalyst deactivation. Heavy duty diesel engines, which are almost exclusively charged, can produce exhaust gases at greater than 500°C. Under conditions of high load and/or high speed, and such temperatures deactivation of the catalyst may occur.

In the presentation of Dirk Vatareck (Catalysts Automotive Applications, Argillon) at the 3rd CTI Forum SCR Systems (Bonn 09 Apr 2008) there were reported maximum operation temperatures for a TiO₂/WO₃/V₂O₅ catalyst of 550°C and 580° C on short term basis.

In view of the future emission regulations (Euro VI) an improvement in thermal stability of a V₂O₅ containing TiO₂/WO₃ based catalyst was reported in the presentation of Dirk Vatareck (Catalysts Automotive Applications, Argillon) at the 3rd CTI Forum SCR Systems (Bonn 09 Apr 2008) according to which a catalyst containing V₂O₅ as active component and a support material consisting of TiO₂/WO₃ and additionally containing Si may be operated at maximum temperatures of 600°C and 650° on a short term basis.

In the presentation "HDD- On- and Off Road SCR Systems - Euro VI/Stage IV and beyond" by Marco Lopez et al. from UMICORE on 3.07.2012 at the CTI Forum (SCR systems) in Munich it was reported on slide 8, that Vanadia SCR may offer interesting performance and cost potentials. However, even with optimized technologies thermal stability remains a risk. Vanadia based catalysts according to the given graphs on slide 8 are at least significantly deactivated after hydrothermal ageing at 700°C.

A Vanadia /Titania SCR catalyst having an improved hydrothermal stability at 700°C and a method for its manufacture is disclosed in EP 2 352 161 A1. In the examples of EP 2 352 161 A1 catalysts are described which are made out of a Titania/Vanadia based material which was coated (in form of a slurry) on a substrate in the presence of Alumina sol as a binder. However, the enhanced thermal stability of the catalyst can only be achieved when a separate long hydrothermal pre-heattreatment of the substrate (ceramic fiber) at 700°C for 24 hours prior to the coating is applied. The examples teach that the binder (Alumina sol) which is used in the coating process does not contribute to the thermal stability. The process for the preparation of the catalyst with enhanced thermal stability might have a disadvantage since a long term hydrothermal ageing of the substrate is required.

As a summary, from the prior art review it may be concluded that with increasingly stringent automobile exhaust emission regulations for Diesel vehicles (eg. EURO 6 regulations) aftertreatment systems containing a Diesel Particulate Filter (DPF) as well as a SCR catalyst will be required in future. Such systems will demand a higher temperature stability of the SCR catalyst and most of the current V₂O₅ /Titania based systems cannot be considered to be viable for such an application.

### Objective and disclosure of the invention

Keeping in mind the above problems occurring in the prior art the objective of the invention is to provide a V₂O₅ /Titania based SCR catalyst for removing nitrogen oxides having an excellent hydrothermal stability and a simple process for its preparation.

Surprisingly it was found that the hydrothermal stability of a V₂O₅/Titania based SCR catalyst may be improved significantly when a binder, more specifically an Alumina precursor such as Boehmite or Pseudo-boehmite, is applied in the preparation process of the catalyst.

In one aspect the present invention provides a catalyst composition for removing nitrogen oxides, e.g. for selective catalytic reduction of NOx, in exhaust gases, comprising Titania/Vanadia and an Alumina precursor, preferably a Boehmite or Pseudo-boehmite, most preferably Pseudo-boehmite Pural NG^{®} (from SASOL), as a binder;
and a catalyst comprising a metallic or ceramic substrate, preferably a ceramic substrate, most preferably Cordierite, which subtrate is coated with such catalyst composition.

A catalyst (composition) provided by the present invention is herein designated as "a catalyst (composition) of (according to) the present invention.

A binder as used herein is a substance which enhances the adhesion of the catalyst composition on a substrate (support).

In a preferred embodiment a catalyst composition according to the present invention comprises V in an amount of 0.1% to 5% by weight.

In another preferred embodiment a catalyst composition according to the present invention comprises TiO₂ in an amount of at least 55% by weight, preferably 55 to 80% by weight, such as 55% to 70% by weight.

In another preferred embodiment a catalyst composition according to the present invention comprises the binder based on an Alumina precursor in an amount of 2% to 40% per weight, preferably 3% to 35% by weight, more preferably 5% to 25 % by weight.

A catalyst composition according to the present invention preferably further comprises WO₃ in an amount of up to 20% by weight, preferably 2% to 15% by weight, more preferably 5% to 10% by weight.

A catalyst composition according to the present invention optionally comprises SiO₂ in an amount of up to 20% by weight, preferably 2% to 15% by weight, more preferably 5% to 10% by weight.

V in a catalyst composition of the present invention is introduced in the form of a vanadiumoxide precursor which forms vanadiumoxide on heat-treatment of the precursor below a temperature of 600°C.

A catalyst composition according to the present invention is useful for the preparation of a SCR catalyst and in another aspect the present invention provides the use of a catalyst composition according to the present invention for the preparation of a SCR catalyst, i.e. a catalyst for the removal of nitrogen oxides in exhaust gases.

A catalyst according to the present invention may be obtained by coating a support (substrate) with a catalyst composition according to the present invention.

An appropriate support (substrate) e.g. includes a metallic or ceramic substrate, in particular a ceramic substrate, in particular a Cordierite.

In a further aspect the present invention provides a catalyst, comprising a metallic or ceramic substrate, in particular a ceramic substrate, in particular a Cordierite, which subtrate is coated with a catalyst composition of the present invention.

A catalyst according to the present invention may be obtained as appropriate, e.g, according to, e.g. analogously, to a method as conventional, or as described herein.

In another aspect the present invention provides a process for the preparation of a catalyst for removing nitrogen oxides, e.g. for selective catalytic reduction of nitrogen oxides (NOx), in exhaust gases, comprising a first step [A] and a second step [B],
step [A] comprising the substeps
A1) suspending a support material containing TiO₂ in water to obtain a TiO₂ suspension,
A2) dissolving or suspending a vanadiumoxide precursor, which forms vanadiumoxide on heattreatment below a temperature of 600°C, in particular ammoniummetavanadate, in water to obtain a solution or suspension containing the vanadiumoxide precursor,
A3) combining the TiO₂ suspension of step A1) with the solution/suspension of the vanadiumoxide precursor of step A2), and stirring the mixture obtained at a temperature of 5°C to 100°C, in particular at room temperature,
A4) evaporating excess of water,
A5) drying the mixture obtained in step A4), in particular at a temperature from 80°C to 150°C, and
A6) calcining the mixture obtained in step A5) under air at a temperature from 350°C to 700°C, in particular from 400°C to 600°C, in particular from 520°C to 580°C to obtain a TiO₂/V powder,
step [B] comprising the substeps
B1) providing an aqueous slurry from the TiO₂/V powder obtained in step [A],
B2) combining the aqueous slurry of step B1) with an Alumina precursor as a binder, in particular a Boehmite or pseudo-boehmite, in particular Pseudoboehmite Pural NG^{®},
B3) coating a metallic or ceramic substrate, in particular a ceramic substrate, in particular a Cordierite substrate with the aqueous slurry of step B2),
B4) drying the coated substrate of step B3) with an hot air stream at approximately 400°C to obtain the "fresh catalyst".

The typical loading of the catalyst composition (including the binder) of the present invention on the substrate is in the range of 50 g/L(iter) to 350 g/L catalyst, preferably from 80 g/L and 300 g/L, most preferably from 100g/L to 200g/L catalyst.

The coating of the substrate (support) may be carried out several times bringing the slurry of a catalyst composition of the present invention into contact with the substrate. Preferably an air stream is additionally, e.g. used in case of a honeycomb as a subnstrate, so that the cells of the honeycomb are coated without blocking them. The impregnated substrate obtained is heat treated, e.g.with a hot air stream, in particular from 100°C to 650°C, preferably 200°C to 500°C, more preferably 350°C to 450°C for an appropriate time, e.g. several hours. A catalyst according to the present invention is obtained (designated herein also as "fresh catalyst" in order to distinguish the catalyst obtained from the catalyst after ageing).

### Ageing of the catalyst (Hydrothermal Ageing)

The "fresh catalyst" thus obtained may be subjected to ageing, in particular hydrothermal ageing, e.g. by subjecting it to heat-treatment at 700°C for 10 hours at which an air stream containing 10% v/v H₂O is passed through the catalyst, in order to determine its stability. Thus, the catalyst obtained was subjected to heat-treatment in a reactor at 700°C for 10 hours at which an air stream (250L/hour) containing 10% v/v H₂O is passed through the catalyst.

### Conditions for catalytic testing:

For catalytic testing of the NOₓ-removal efficiency the catalysts were subjected to catalytic testing. Reaction and gas conditions used are as set out in Table 1 below:

**Table 1**

| | |
|---|---|
| Reactor | 2.54 cm |
| Catalyst | Cordierite honeycomb 400cpsi, h = 5.08 cm, Vol = 25 cm3 |
| Coating | Approx. 120 - 160 g /Liter |
| Space velocity | 30 000 h⁻¹ |
| Temperature | 200-500°C / ramp of 5°C/ min (shell temperature) |
| NOₓ conc. | 400 ppm NO |
| NH₃ : NOₓ | 1 |
| O₂ conc. | 6% |
| H₂O conc. | 7% |
| N₂ conc. | Balance |

### Brief description of the drawings

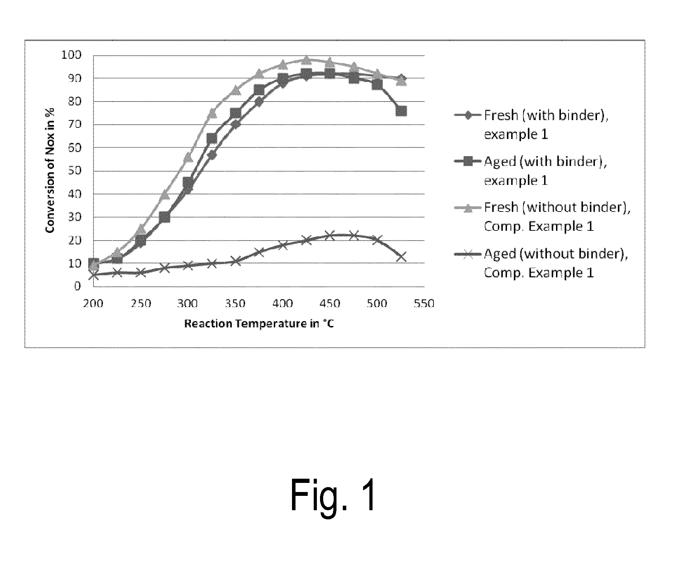

Fig. 1 shows the removal of nitrogen monoxide according to a reaction temperature as indicated (temperature measured on the shell of the catalyst) under use of a catalyst prepared according to example 1 and under use of a catalyst prepared according to comparative example 1

### Example 1

### Preparation of a catalyst according to the present invention

### Step A

### Preparation of the Washcoat Powder

5.74 g of Ammoniummetavanadate (V₂O₅ content: 77.9% by weight were suspended in 150 mL of deionised water, the mixture obtained was heated to approximately 80°C and a clear solution of ammoniummetavanadate was obtained. On the other hand 94.26 g of Titania support (TiO₂:WO₃:SiO₂ = 81:9:10 % by weight; "Tiona DT58^{®}" from Millenium Chemicals) were suspended in 500 mL of deionised water and the mixture obtained was stirred. After a few minutes the TiO₂ slurry obtained was mixed with the ammoniummetavanadate-solution and the mixture obtained was stirred vigourously for 2 hours at room temperature. Excess of water was evaporated, first at 60°C and then to complete dryness at 100°C. The mixture obtained was dried at 120°C overnight. The dried mixture was then calcined at 550°C/3 hours. A Washcoat Powder was obtained having a V₂O₅ content of 4.5% by weight which corresponds to a V content of 2.5% by weight.

### Step B

### Preparation of coated catalyst

An aqueous slurry was provided from 75 ml deionized water, 10 g of the Washcoat Powder obtained in step A above and 2 g of Pseudoboehmite Pural NG^{®} (from SASOL, Anckelmannsplatz 1, 20537 Hamburg) as a binder and a Washcoat-Binder-Slurry was obtained.

A cordierite honeycomb having a cell density of 400 cpsi, a height of 5.08 cm and a volume of 25 cm³ was impregnated with the Washcoat-Binder-Slurry obtained as described above. Coating the honeycomb was carried out several times bringing the slurry into contact with the honeycomb and using an air stream so that the monolithic cells are coated without being blocked. The impregnated honeycomb obtained was heat treated at 400°C for 4 hours to yield the "fresh catalyst". The loading of the Washcoat-Binder on the honeycomb was 156 g / Liter catalyst. Hydrothermal ageing of the catalyst was performed at 700°C for 10 hours in a reactor in an air stream containing 10% water at an air flow rate of 250 Liter/hour.

### Comparative Example 1

Was carried out according to the method as described in example 1, with the exception that no binder was added to the slurry in step B.

The loading of the washcoat on the honeycomb was 137 g / Liter catalyst.

Hydrothermal ageing of the catalyst was performed at 700°C for 10 hours in a reactor in an air stream containing 10% water at an air flow rate of 250 Liter/hour.

### Catalytic testing of coated catalyst

Testing was performed according to the parameters as disclosed in Table 1 above.

In Table 2 the NOₓ conversion in % at temperatures from 200 - 500°C (shell temperature) with a catalyst prepared under use of a honeycomb coated catalyst as prepared in example 1 and in comparative example 1 under fresh and aged conditions are indicated. As a feed gas there was applied practically NO only (feedgas = > 90% NO)

**Table 2**

| | | | | | | | | | | | | | |
|---|---|---|---|---|---|---|---|---|---|---|---|---|---|
| **T [°C]** | 200 | 225 | 250 | 275 | 300 | 325 | 350 | 375 | 400 | 425 | 450 | 475 | 500 |

| **Example 1** | | | | | | | | | | | | | |
|---|---|---|---|---|---|---|---|---|---|---|---|---|---|
| Fresh catalyst | 10 | 12 | 19 | 30 | 42 | 57 | 70 | 80 | 88 | 91 | 92 | 92 | 91 |
| Aged catalyst *) | 10 | 12 | 20 | 30 | 45 | 64 | 75 | 85 | 90 | 92 | 92 | 90 | 87 |

| **Comparative example 1** | | | | | | | | | | | | | |
|---|---|---|---|---|---|---|---|---|---|---|---|---|---|
| Fresh catalyst | 9 | 15 | 25 | 40 | 56 | 75 | 85 | 92 | 96 | 98 | 97 | 95 | 92 |
| Aged catalyst *) | 5 | 6 | 6 | 8 | 9 | 10 | 11 | 15 | 18 | 20 | 22 | 20 | 13 |

| | | | | | | | | | | | | | |
|---|---|---|---|---|---|---|---|---|---|---|---|---|---|
| *) ageing at 700°C/10 hours in the presence of 10 % water in a reactor T: temperature in degree Celsius | | | | | | | | | | | | | |

## Claims

1. A catalyst composition for removing nitrogen oxides in exhaust gases, comprising Titania/Vanadia and an Alumina precursor as a binder.

2. A catalyst composition of claim 1, wherein the Alumina precursor is a Boehmite or Pseudo-boehmite.

3. A catalyst composition of any one of claim 1 or 2, wherein the Alumina precursor is Pseudo-boehmite Pural NG^{®}.

4. A catalyst composition of any one of claims 1 to 3, comprising V in an amount of 0.1% to 5% by weight.

5. A catalyst composition of any one of claims 1 to 4, comprising TiO₂ in an amount of at least 55% by weight.

6. A catalyst composition of any one of claims 1 to 5, comprising the binder based on an Alumina precursor in an amount of 2% to 40% by weight, in particular of 3% to 35% by weight, in particular 5% to 25 % by weight.

7. A catalyst composition of any one of claims 1 to 6, further comprising WO₃, particularly in an amount of up to 20% by weight.

8. A catalyst composition of any one of claims 1 to 7, further comprising SiO₂, particularly in an amount of up to 20% by weight.

9. Use of a catalyst composition according to any one of claims 1 to 8, for the preparation of a SCR catalyst, in particular for removing nitrogen oxides in exhaust gases.

10. Catalyst for removing nitrogen oxides in exhaust gases, comprising a catalyst composition of any one of claims 1 to 8 on a substrate.

11. Catalyst according to claim 10, comprising a metallic or ceramic substrate, in particular a ceramic substrate, in particular a Cordierite, which subtrate is coated with a catalyst composition of any one of claims 1 to 8.

12. A process for the preparation of a catalyst for removing nitrogen oxides in exhaust gases, comprising a first step [A] and a second step [B],
step [A] comprising the substeps
A1) suspending a support material containing TiO₂ in water to obtain a TiO₂ suspension,
A2) dissolving or suspending a vanadiumoxide precursor, which forms vanadiumoxide on heattreatment below a temperature of 600°C, in particular ammoniummetavanadate, in water to obtain a solution or suspension containing the vanadiumoxide precursor,
A3) combining the TiO₂ suspension of step A1) with the solution/suspension of the vanadiumoxide precursor of step A2), and stirring the mixture obtained at a temperature of 5°C to 100°C, in particular at room temperature,
A4) evaporating excess of water,
A5) drying the mixture obtained in step A4), in particular at a temperature from 80°C to 150°C, and
A6) calcining the mixture obtained in step A5) under air at a temperature from 350°C to 700°C, in particular from 400°C to 600°C, in particular from 520°C to 580°C to obtain a TiO₂/V powder,
step [B] comprising the substeps
B1) providing an aqueous slurry from the TiO₂/V powder obtained in step [A],
B2) combining the aqueous slurry of step B1) with an Alumina precursor as a binder, in particular a Boehmite or pseudo-boehmite, in particular Pseudoboehmite Pural NG^{®},
B3) coating a metallic or ceramic substrate, in particular a ceramic substrate, in particular a Cordierite substrate with the aqueous slurry of step B2),
B4) drying the coated substrate of step B3) with an hot air stream, in particular at 100 - 650°C, 200 - 500°C, 350 - 450°C, to obtain the "fresh catalyst".
